**Europäisches Patentamt**

(19) **European Patent Office**

**Office européen des brevets**

(11) Veröffentlichungsnummer: **0 009 600**
**B1**

(12) **EUROPÄISCHE PATENTSCHRIFT**

(45) Veröffentlichungstag der Patentschrift:
04.08.82

(51) Int. Cl.³: **G 06 F 11/22**, G 06 F 11/00

(21) Anmeldenummer: **79103076.0**

(22) Anmeldetag: **21.08.79**

(54) Verfahren und Schnittstellenadapter zum Durchführen von Wartungsoperationen über eine Schnittstelle zwischen einem Wartungsprozessor und einer Mehrzahl einzeln zu prüfender Funktionseinheiten eines datenverarbeitenden Systems.

(30) Priorität: **29.09.78 DE 2842603**

(43) Veröffentlichungstag der Anmeldung:
**16.04.80 Patentblatt 80/8**

(45) Bekanntmachung des Hinweises auf die Patenterteilung:
**04.08.82 Patentblatt 82/31**

(84) Benannte Vertragsstaaten:
**AT BE CH FR GB IT NL**

(56) Entgegenhaltungen:
**DE-A-2 350 371**
**US-A-3 921 139**
**US-A-3 997 879**

(73) Patentinhaber: **SIEMENS AKTIENGESELLSCHAFT**
**Berlin und München, Postfach 22 02 61,**
**D-8000 München 22 (DE)**

(72) Erfinder: **Dietl, Erich, Dipl.-Ing., Am Graspoint 24,**
**D-8200 Rosenheim (DE)**
Erfinder: **Haas, Hans, Dipl.-Phys.,**
**Adam-Berg-Strasse 17, D-8000 München 83 (DE)**

BUNDESDRUCKEREI BERLIN

## Verfahren und Schnittstellenadapter zum Durchführen von Wartungsoperationen über eine Schnittstelle zwischen einem Wartungsprozessor und einer Mehrzahl einzeln zu prüfender Funktionseinheiten eines datenverarbeitenden Systems

Die Erfindung betrifft ein Verfahren zum Durchführen von Wartungsoperationen über eine Schnittstelle zwischen einem Wartungsprozessor und einer Mehrzahl einzeln zu prüfender Funktionseinheiten eines datenverarbeitenden Systems, wobei jeder Schnittstellenanschluß zu einer Funktionseinheit unabhängig von deren Funktionsumfang identisch ausgebildet ist und in jeder Funktionseinheit ebenfalls ein identisch ausgebildeter Schnittstellenadapter vorgesehen ist, der als Umcodierer und Zwischenspeicher für Daten- und Steuerinformationen zu und von der Funktionseinheit dient und dessen interne Schnittstelle zur Funktionseinheit wesentlich breiter als die Schnittstelle zum Wartungsprozessor ausgelegt ist, und wobei zur Ausführung von Wartungsoperationen Daten bzw. Steuersignale, begleitet von Taktsignalen, bitseriell in beide Richtungen über die Schnittstellenanschlüsse übertragen werden.

Ein derartiges Verfahren ist z. B. durch die US-PS 3 921 139 bekannt. Gegenüber anderen bekannten Lösungen unterscheidet sich die durch diese Patentschrift bekannte Lösung bereits dadurch, daß die Wartungsschnittstelle für alle Funktionseinheiten einheitlich ausgebildet ist und nur eine geringe Breite aufweist, so daß sie unabhängig von der Zahl der zu überprüfenden Funktionseinheiten nur einen geringen Aufwand erfordert und dennoch leicht an die unterschiedlichen Anforderungen der Wartungsaufgaben für die einzelnen Funktionseinheiten angepaßt werden kann.

Darüber hinaus muß jedoch gefordert werden, daß die Wartungsschnittstelle auch noch in den meisten Fehlerfällen funktionsfähig ist und daß von der jeweils zu testenden Funktionseinheit, die beliebig defekt sein kann, nur ein Minimum an Funktionen vorausgesetzt werden darf. Diesen Anforderungen genügt die bekannte Lösung noch nicht. Es ist daher Aufgabe der Erfindung, die bekannte Lösung derartig weiterzubilden, daß sie bei hoher Anpassungsfähigkeit auch erhöhten Sicherungsanforderungen genügt.

Dies wird gemäß der Erfindung dadurch erreicht, daß die Übertragung der Datensignale mit einem gesicherten Verfahren durchgeführt wird und zusätzlich auf eigenen Leitungen uncodierte Notsignale übertragen werden können, daß bei der Übertragung der Datensignale über den Schnittstellenanschluß in jeder Übertragungsrichtung die Taktsignale auf eigenen Leitungen gesondert übertragen werden, wobei aus dem vom Wartungsprozessor abgegebenen Ausgangstaktsignal das in Gegenrichtung übertragene Eingangstaktsignal abgeleitet wird, daß die Datenelemente zum Übertragen in Impulspaare umgewandelt werden, deren Flanken jeweils mit einer der beiden Flanken des zugehörigen Taktsignals synchronisiert sind, wobei jedes Impulspaar bei jeder der anderen Flanken des Taktsignals ausgewertet wird, und daß der Informationsaustausch zwischen dem Schnittstellenadapter und der dazugehörigen Funktionseinheit mit gesonderten Strobeimpulsen gesteuert wird.

Gemäß dem neuen Verfahren wird zunächst zwischen Datensignalen und Notsignalen unterschieden. Für die Datensignale wird dabei ein gesichertes Übertragungsverfahren verwendet, das wegen seiner Redundanz alle Einzelfehler und die meisten Mehrfachfehler bei der Übertragung selbst bzw. bei der Datenübernahme in die Empfangsschaltungen zu erkennen erlaubt. Die Übertragungsprozedur ist dabei so ausgelegt, daß der Wartungsprozessor in jedem Fall die Prozedur steuert, die zu testenden Funktionseinheiten also nur auf Anforderung reagieren.

Dabei ist die Schnittstelle völlig transparent in bezug auf die Nachrichtenlänge und auch auf die Art der zu übertragenden Informationen, was ihre Flexibilität erbringt. Dies gilt insbesondere auch hinsichtlich der Datenübertragungsgeschwindigkeit, die bei verschiedenen Funktionseinheiten durchaus um Größenordnungen voneinander abweichen kann. Uncodiert werden nur wenige Signale über die Schnittstelle zwischen dem Wartungsprozessor und der zu testenden Funktionseinheit ausgetauscht. Solche »Notsignale« können nicht codiert übertragen werden, da sie nur ein Minimum an Funktionsfähigkeit der angeschlossenen Funktionseinheit voraussetzen dürfen. Diese Signale, hier ein Anforderungssignal einer gestörten Funktionseinheit an den Wartungsprozessor und ein Rücksetzsignal des Wartungsprozessors an die Funktionseinheit, das ein hartes Rücksetzen der wesentlichen Schaltungen dieser Funktionseinheit gestattet, sind generell bei allen Funktionseinheiten in gleicher Weise definiert, so daß auch diese beiden gesondert übertragenen Signale keine Einbuße an Flexibilität der Schnittstelle bedeuten.

Ein Ausführungsbeispiel der Erfindung wird im folgenden anhand der Zeichnung näher erläutert. Dabei zeigt

Fig. 1 ein Blockschaltbild einer Wartungsschnittstelle zwischen Funktionseinheiten und einem Wartungsprozessor einer datenverarbeitenden Anlage,

Fig. 2 anhand von Impulsdiagrammen den prinzipiellen Aufbau der über die Schnittstelle übertragenen Takt- bzw. Datensignale,

Fig. 3 ein Blockschaltbild für einen integrierten Schnittstellenadapter, der in jede Funktionseinheit eingebaut ist,

Fig. 4 in Form von Impulsdiagrammen ein Beispiel für den Ablauf des Nachrichtenaustausches über die Schnittstelle und

Fig. 5 ein Blockschaltbild eines über einen Parallelbus erreichbaren Registersatzes als Beispiel für eine zu testende Funktionseinheit.

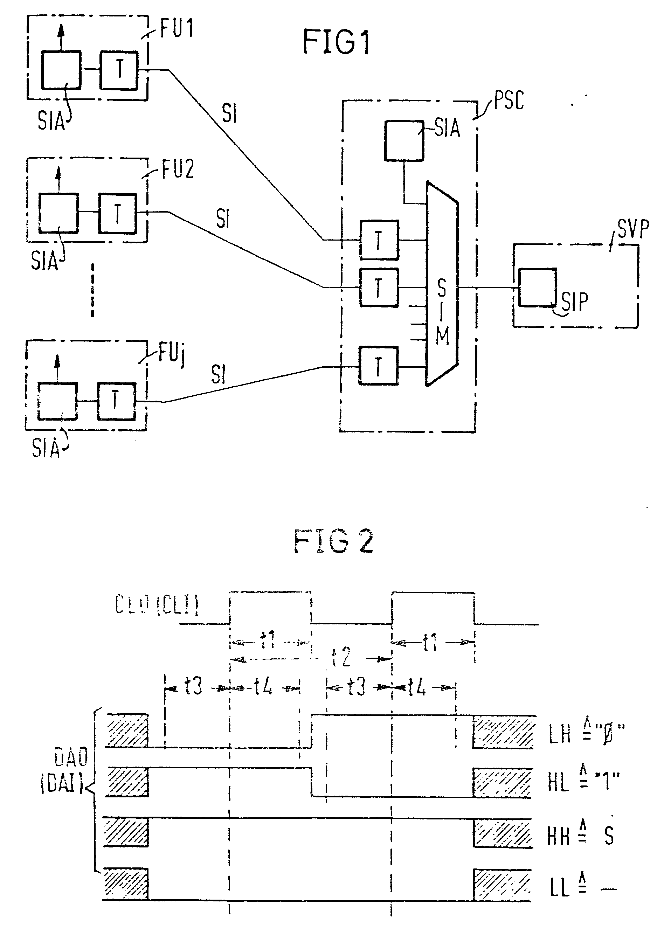

In dem in Fig. 1 dargestellten Prinzipschaltbild einer Wartungsschnittstelle sind eine Reihe von Funktionseinheiten FU1, FU2 . . . FUj einer datenverarbeitenden Anlage schematisch angedeutet. Die Wirkungsweise und der Zweck der einzelnen Funktionseinheiten eines solchen datenverarbeitenden Systems sind im vorliegenden Zusammenhang ohne besondere Bedeutung. Deshalb sei hier nur angedeutet, daß darunter Einheiten der datenverarbeitenden Anlage verstanden werden, die selbständig bestimmte Funktionen übernehmen und deshalb auch für sich auf ihre einwandfreie Funktion durch einen Wartungsprozessor SVP überwacht werden sollen. Als Beispiele für solche Funktionseinheiten seien hier nur das Primärspeichersystem, Verarbeitungseinheiten oder Ein-/Ausgabeeinheiten der datenverarbeitenden Anlage genannt. Die Wartungsschnittstelle zwischen diesen Funktionseinheiten FU1 . . . FUj und dem Wartungsprozessor SVP ist durch Schnittstellenleitungen SI angedeutet, die über eine Koordinatorschaltung PSC an ein Ein-/Ausgabetor SIP des Wartungsprozessors SVP angeschlossen sind.

Die Koordinatorschaltung PSC enthält im wesentlichen einen Schnittstellenmultiplexer SIM, an den über Übertragerbausteine T die Schnittstellenleitungen SI angeschlossen sind. In den einzelnen Funktionseinheiten sind diese Schnittstellenleitungen SI ebenso wieder durch Übertragerbausteine T abgeschlossen und diese mit einem Schnittstellenadapter SIA verbunden. Dieser Schnittstellenadapter, ein hochintegrierter Baustein, der später noch näher erläutert wird, hat im wesentlichen die Aufgabe, den schmalen Schnittstellenanschluß SI in eine breitere Schnittstelle zu der angeschlossenen Funktionseinheit FUj so umzusetzen, daß die darüber übertragenen Signale von der Funktionseinheit FU leicht auswertbar sind.

Der Schnittstellenadapter SIA erlaubt, den eigentlichen Schnittstellenanschluß SI so schmal wie möglich zu halten. Dieser Gesichtspunkt ist nicht nur aus Aufwandsgründen wesentlich, weil z. B. sehr viele Funktionseinheiten FUj durch den Wartungsprozessor SVP zu überwachen sind, sondern auch aus Gründen der Verfügbarkeit. Denn der Schnittstellenanschluß SI zu einer Funktionseinheit muß auch dann noch funktionsfähig sein, wenn Wartungsaufgaben durchzuführen sind. Über den Schnittstellenanschluß SI werden Informationen in beiden Richtungen bitseriell über Datenleitungen übertragen, die von Taktsignalen begleitet sind. Nur Signale, die nicht codiert übertragen werden können, da sie nur ein Minimum an Funktionsfähigkeit voraussetzen dürfen, werden gesondert übertragen. Über jeden Schnittstellenanschluß SI laufen daher je drei Arten von Signalen in beiden Richtungen: Vom Wartungsprozessor wird ein Ausgangstaktsignal CLO, ein Datenausgangssignal DAO und ein Rücksetzsignal RES über den Schnittstellenanschluß SI abgegeben. In Gegenrichtung werden vom Schnittstellenadapter SIA zum Wartungsprozessor SVP ein aus dem Ausgangstaktsignal CLO abgeleitetes Eingangstaktsignal CLI, ein Dateneingangssignal DAI und ein Anforderungssignal SRQ übertragen.

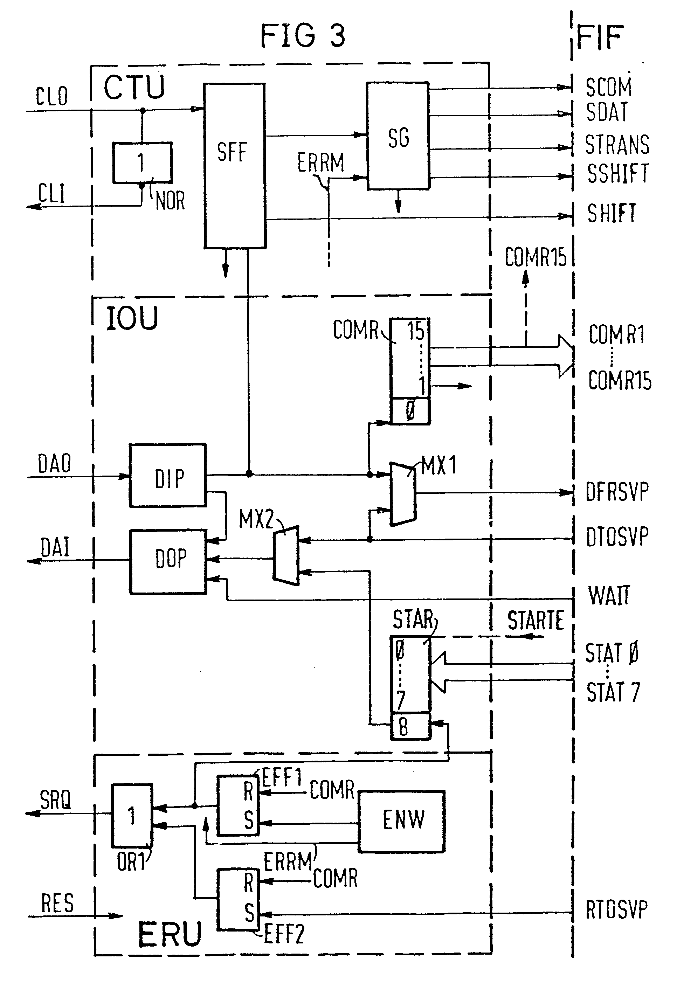

Aus den in Fig. 2 dargestellten Impulsdiagrammen dieser Schnittstellensignale ist zunächst einmal die Codierung zu entnehmen. Das Ausgangstaktsignal CLO und das Datenausgangssignal DAO bzw. das Eingangstaktsignal CLI und das Dateneingangssignal DAI arbeiten als Takt- und Datensignale eines bitseriellen Übertragungssystems zusammen.

Dabei sind drei Grundelemente, aus denen sich die übertragenen Informationen zusammensetzen, in Fig. 2 dargestellt. Um ein gesichertes Übertragungsverfahren zu schaffen, ist jedes Informationsbit in ein Abtastpaar des Datenausgangssignals DAO bzw. des Dateneingangssignals DAI verschlüsselt. In Fig. 2 sind die dabei zugelassenen Codierungen für die Datensignale dargestellt. Dabei bestimmen jeweils zwei aufeinanderfolgende Vorderflanken der Taktsignale CLO bzw. CLI die Auswertezeitpunkte für die zugehörigen Datensignale DAO bzw. DAI. Ein Niedrigpegel L mit einem nachfolgenden hohen Pegel H im Datensignal DAO bzw. DAI bedeutet den Zustand »0« des Informationsbits, der umgekehrte Fall definiert den Zustand »1«. Eine dritte Kombination mit hohem Pegel H ohne einen Signalwechsel entspricht einem Sonderzeichen S, die vierte mögliche Kombination mit Niedrigpegel L ohne Zustandswechsel ist verboten. Die in dieser Codierung enthaltene Redundanz dient der Möglichkeit, Übertragungsfehler über den Schnittstellenanschluß SI zu erkennen.

Die Empfangsschaltungen im jeweiligen Schnittstellenadapter SIA bzw. dem Wartungsprozessor SVP sind so ausgelegt, daß ein Element dieser Datensignale jeweils mit zwei aufeinanderfolgenden Vorderflanken der Taktsignale CLO bzw. CLI ausgewertet wird. Dabei gelten folgende Zeitbedingungen: Die Taktsignale dürfen eine bestimmte, technologisch bedingte Maximalfrequenz nicht überschreiten, d. h. es ist eine minimale Impulsdauer t1 bzw. eine minimale Impulsperiode t2 vorgegeben. Weiterhin darf sich der Zustand eines Datensignals DAO bzw. DAI wegen der nur endlichen Entscheidungsschärfe der Auswerteschaltungen kurz vor bzw. nach dem Auswertezeitpunkt nicht ändern. Die entsprechenden Zeiten t3 und t4 für den Vorlauf bzw. den Nachlauf im Datensignal sind in Fig. 2 angedeutet.

Somit ist für die Übertragungsgeschwindigkeit zwar eine technologisch bedingte obere Grenze definiert, das Übertragungsverfahren darf aber unterhalb dieser Maximalfrequenz beliebig langsam sein. Die Empfangsschaltungen werden in ihrem zeitlichen Verhalten nur von den begleitenden Taktsignalen CLO bzw. CLI gesteuert und benötigten selbst keine zeitbestimmenden Glieder. Damit ist das Übertragungsverfahren flexibel auf Funktionseinheiten unterschiedlicher Eigenschaften,

3

gesteuert durch den Wartungsprozessor SVP, anpaßbar.

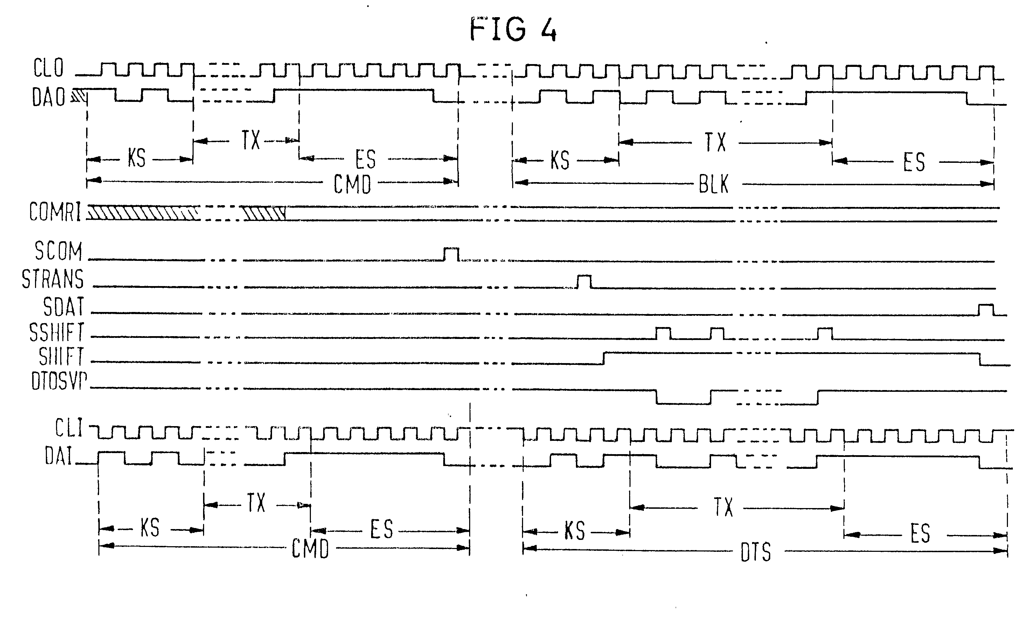

Aus den drei Informationselementen »0«, »1« und »S« werden drei verschiedene Typen von Sendungen zusammengesetzt und in den Empfängerschaltungen unterschieden. Dabei gliedert sich eine Sendung immer, wie aus den in Fig. 4 dargestellten und im übrigen später näher erläuterten Impulsdiagrammen zu erkennen ist, in eine Kopfsequenz KS, einen Testteil TX und eine Endesequenz ES. Die aus zwei Informationselementen bestehende Kopfsequenz KS stellt eine Codierung für den Sendungstyp dar. Die Kopfsequenz KS enthält z. B. bei einer Befehlssendung zwei Informationsbits im Zustand »1« und bei einer Daten- bzw. Leerrahmensendung zwei Informationsbits im Zustand »0«. Der Textteil TX ist in seiner Länge grundsätzlich variabel, er enthält bei einer Leerrahmensendung jedoch nur Informationselemente »0«. Wegen der variablen Länge des Textteils dient die Endesequenz ES dazu, das Sendungsende zu kennzeichnen und besteht dazu aus zwei aufeinanderfolgenden Sonderzeichen »S« und einem abschließenden Informationselement »1«.

Befehlssendungen CMD dienen der Übermittlung von Wartungsbefehlen vom Wartungsprozessor SVP an die entsprechende Funktionseinheit FUj bzw. an den dieser Funktionseinheit zugeordneten Schnittstellenadapter SIA. Sie gehen deshalb immer vom Wartungsprozessor SVP aus und werden im entsprechenden Schnittstellenadapter SIA ausgewertet, gleichzeitig aber zur Kontrolle unverändert als Dateneingangssignale DAI zusammen mit dem Eingangstaktsignal CLI zum Wartungsprozessor SVP zurückgesendet.

An eine solche Befehlssendung können sich Datensendungen DTS anschließen, mit denen der Wartungsprozessor SVP Daten an eine Funktionseinheit FUj übermittelt. Auch solche Datensendungen werden vom zugeordneten Schnittstellenadapter SIA ausgewertet und gleichzeitig zur Kontrolle unverändert analog zur Befehlssendung zum Wartungsprozessor SVP zurückgesendet.

Eine Leerrahmensendung BLK bietet dem zugeordneten Schnittstellenadapter SIA die Möglichkeit, auf einfache Weise eine Datensendung zum Wartungsprozessor SVP zu generieren. Empfängt der Schnittstellenadapter SIA vom Wartungsprozessor eine solche Leerrahmensendung BLK, so bleiben Kopf- und Endesequenz KS bzw. ES unverändert. An die Stelle der Informationselemente »0« im Textteil werden nun aber durch den Schnittstellenadapter SIA von der Funktionseinheit FUj angebotene Daten mit der entsprechenden paarweisen Verschlüsselung eingesetzt.

Mit diesen drei Sendungstypen lassen sich alle Wartungsoperationen zusammensetzen, die in der ausgewählten Funktionseinheit FUj, angestoßen vom Wartungsprozessor SVP, auszuführen sind. Wird dabei ein bidirektionales Übertragungsverfahren gewählt, bei dem Signale auf einer verdrillten Leitung gleichzeitig in beiden Richtungen übertragen werden können, dann benötigt der Schnittstellenanschluß SI nur drei Leitungen für die Übertragung der Taktsignale CLO bzw. CLI, der Datensignale DAP bzw. DAI und des Rücksetzsignals RES bzw. des Anforderungssignals SRQ.

Vorstehend wurde bereits deutlich, daß sich ein so einfacher Schnittstellenanschluß SI nur mit einem entsprechenden Schnittstellenadapter SIA in den an den Wartungsprozessor SVP angeschlossenen Funktionseinheiten FUj der datenverarbeitenden Anlage verwirklichen läßt. Ein Blockschaltbild eines solchen Schnittstellenadapters SIA, der sich als LSI-Schaltkreis realisieren läßt, ist in Fig. 3 dargestellt. Dieses Blockschaltbild gliedert sich in drei Teile, eine Zeitsteuereinheit CTU, eine Ein-/Ausgabeeinheit IOU und eine Fehlererkennungseinheit ERU.

Die Zeitsteuereinheit CTU empfängt vom Wartungsprozessor SVP das Ausgangstaktsignal CLO und setzt es in einem ersten NOR-Glied NOR1 in das Eingangstaktsignal CLI um. Das Ausgangstaktsignal CLO des Wartungsprozessors SVP wird in der Zeitsteuereinheit CTU einem Satz von Zustands-Flipflops SFF zugeführt, der in Fig. 3 nur schematisch angedeutet ist.

Zu diesen Zustandsflipflops SFF gehören zunächst zwei im einzelnen nicht dargestellte Taktflipflops TP1 und TP2, deren Funktion in Tabelle 1 kurz gefaßt ist:

Tabelle 1

| | | TP 1 | TP 2 |
|---|---|---|---|
| Takt | | CLO ↑ | CLO ↓ |
| Setzen | $\overline{TP\,1} \cdot (\overline{S\,2} + DAO)$ | | TP 1 |
| Rücksetzen | | RES | RES |

Dies besagt, daß die Taktflipflops TP1 bzw. TP2 mit der ansteigenden bzw. abfallenden Flanke des Ausgangstaktsignals CLO getaktet sind, einen D-Eingang besitzen, dem das angegebene Setzsignal zugeführt wird und durch das Rücksetzsignal RES des Wartungsprozessors SVP hart zurückgesetzt werden.

Aus dem Zustand dieser Taktflipflops TP1 bzw. TP2 werden interne Taktsignale CL1 bzw. CL2 des Schnittstellenadapters SIA abgeleitet:

4

$$CL1 = TP1 \cdot \overline{TP2} \tag{1}$$

$$CL2 = TP2 \cdot \overline{TP1} \tag{2}$$

Zwei weitere Zustandsflipflops S1 und S2 dienen der Erkennung einer Endesequenz ES, ihre Betriebsweise ist analog schematisch in Tabelle 2 angegeben:

Tabelle 2

|  | S 1 | S 2 |
|---|---|---|
| Takt | CL 2 ↑ | CL 2 ↑ |
| Setzen | DOUT · DAO | S 1 · DOUT · DAO |
| Rücksetzen | RES | RES |

Da im Schnittstellenadapter SIA die Sendungstypen unterschieden werden müssen, sind dafür zwei weitere Zustandsflipflops CMESS bzw. DMESS vorgesehen, deren Funktion in Tabelle 3 kurz erläutert ist:

Tabelle 3

|  | CMESS | DMESS |
|---|---|---|
| Takt | CL 2 ↑ | CL 2 ↑ |
| Setzen | $\overline{CMESS} \cdot \overline{DMESS} \cdot DOUT + CMESS \cdot S 2$ | $\overline{CMESS} \cdot \overline{DMESS} \cdot DOUT + DMESS \cdot S 2$ |
| Rücksetzen | RES | RES |

Das eine dieser beiden Zustandsflipflops CMESS kennzeichnet eine Befehlssendung. CMD, das andere Flipflop DMESS eine Datensendung DTS, insbesondere also auch eine Leerrahmensendung BLK.

Zwei weitere Zustandsflipflops SHIFT 1 bzw. SHIFT 2 kennzeichnen bestimmte Zeitphasen während einer dieser Sendungen entsprechend der Kurzerläuterung in Tabelle 4:

Tabelle 4

| Takt | CL 2 ↑ | CL 2 ↑ |
|---|---|---|
| Setzen | $(CMESS + DMESS) \cdot \overline{S 2}$ | $SHIFT 1 \cdot \overline{(S 1 + DOUT \cdot DAO)}$ |
| Rücksetzen | RES | RES |

Zu den Zustandsflipflops SFF gehört weiterhin ein Merkerflipflop CMESSD für die Endesequenz ES einer Befehlssendung CMD, in seiner Funktion schematisch erläutert in Tabelle 5:

Tabelle 5

|  | CMESSD |
|---|---|
| Takt | CL 2 ↑ |
| Setzen | CMESS |

Vor allem aus dem Zustand dieser Flipflops werden Ansteuersignale für einen Strobe-Generator SG abgeleitet, der im wesentlichen ebenfalls aus einer Reihe von Flipflop-Schaltungen besteht und über eine Schnittstelle FIF zur angeschlossenen Funktionseinheit eine Reihe von Strobeimpulsen abgibt.

0 009 600

Die Bedeutung und das Zustandekommen dieser Strobeimpulse, sowie eines weiteren Schiebeimpulses SHIFT, der direkt von den Zustands-Flipflops SSF über die Schnittstelle FIF an die Funktionseinheit abgegeben wird, werden nachstehend erläutert.

Ein erster Strobeimpuls SCOM erklärt gegenüber der angeschlossenen Funktionseinheit FUj einen in den Schnittstellenadapter übernommenen Wartungsbefehl für gültig. Er tritt immer dann auf, wenn aufgrund des Funktionszustandes der Zustandsflipflops SSF folgende logische Bedingung erfüllt ist:

$$SCOM = CL2 \cdot \overline{COMR0} \cdot CMESS \cdot CMESSD \cdot \overline{ERRM} \tag{3}$$

Dabei gilt: .

CL2 ist das eine interne Taktsignal (s. Gleichung (2)) $\overline{COMR0}$ kennzeichnet — wie noch erläutert wird —, daß der im Schnittstellenadapter SIA zwischengespeicherte Befehl für die angeschlossene Funktionseinheit FUj, nicht jedoch für den Schnittstellenadapter SIA selbst gilt.

CMESS, CMESSSD sind, s. Tabelle 3 bzw. 5, Signale von Zustandsflipflops SFF zum Kennzeichnen bestimmter Zeitphasen am Ende einer Befehlssendung.

ERRM läßt den Strobeimpuls SCOM nicht zu, wenn vorher bereits ein Übertragungsfehler erkannt und gespeichert wurde, wie noch erläutert wird.

Ein zweiter Strobeimpuls STRANS dient dazu, einen Transfer des Inhalts eines durch einen Wartungsbefehl ausgewählten Registers der angeschlossenen Funktionseinheit FUj einzuleiten. Er wird immer dann gebildet, wenn die Gleichung (4) erfüllt ist:

$$STRANS = CL1 \cdot \overline{COMR0} \cdot COMR1 \cdot DMESS \cdot \overline{SHIFT1} \tag{4}$$

Die Bedeutung dieser Booleschen Gleichung wird deutlich aus der vorstehenden Erläuterung der Zustandsflipflops. COMR1 ist — wie noch erläutert wird — ein Ausgangssignal eines Befehlsregisters COMR, ebenso wie COMR0.

Ein dritter Strombeimpuls SSHIFT kennzeichnet und löst eine bitserielle Datenein- bzw. Datenausgabe im Schnittstellenadapter SIA als Schiebeimpuls aus. Er ergibt sich aus Gleichung (5):

$$SSHIFT = CL2 \cdot \overline{COMR0} \cdot DMESS \cdot SHIFT2 \tag{5}$$

Eine solche serielle Datenübernahme wird von dem Schiebeimpuls SHIFT begleitet. Er ergibt sich aus Gleichung (6):

$$SHIFT = \overline{COMR0} \cdot DMESS \cdot SHIFT1 \tag{6}$$

Ein weiterer wesentlicher Strobeimpuls schließlich ist der Strobeimpuls SDAT. Damit wird die angeschlossene Funktionseinheit FUj in die Lage versetzt, am Ende einer Datenein- oder Datenausgabe eine seriell übernommene Information nun parallel in das eigentliche Zielregister zu übertragen. Dieser Strobeimpuls SDAT ergibt sich aus der Gleichung (7):

$$SDAT = CL2 \cdot \overline{COMR0} \cdot \overline{DMESS} \cdot \overline{CMESS} \cdot \overline{CMESSD} \cdot \overline{ERRM} \tag{7}$$

Nach dieser Erläuterung des Aufbaus der Zeitsteuereinheit CTU- aus Gründen der Übersicht vor allem mit Hilfe von Funktionsgleichungen, aus denen sich die Schaltungsanordnung ohne weiteres ableiten läßt — soll in ähnlicher Weise die Ein-/Ausgabeeinheit IOU des Schnittstellenadapters SIA, dargestellt in Fig. 3, beschrieben werden. Sie dient dazu, über eine Datenempfangsschaltung DIP die vom Wartungsprozessor SVP abgegebenen Datenausgangssignale DAO aufzunehmen und zu decodieren. Mit den von dieser Datenempfangsschaltung DIP abgegebenen Signalen werden ausgewählte Flipflops des Satzes von Zustandsflipflops SFF gesetzt. Daneben werden die Ausgangssignale der Datenempfangsschaltung DIP bei einer Befehlssendung des Wartungsprozessors SVP in ein Befehlsregister COMR seriell übertragen. Der Zustand der 15 höherwertigen Bitstellen dieses Befehlsregisters wird der angeschlossenen Funktionseinheit über die Schnittstelle FIF mit Befehlssignalen COMR1 bis COMR15 parallel angeboten. Empfängt die Datenempfangsschaltung DIP vom Wartungsprozessor SVP jedoch eine Datensendung, so gibt sie diese, decodiert über einen ersten Multiplexer MX1, über die Schnittstelle FIF seriell als Datensignale DFRSVP vom Wartungsprozessor an die Funktionseinheit FUj aus.

Die Datenempfangsschaltung DIP besteht im wesentlichen aus einem Datenempfangsflipflop DOUT. Es wird mit der positiven Flanke des ersten internen Taktsignals CL1 getaktet und ist mit seinem D-Eingang an die Leitung für das Datenausgangssignal DAO angeschlossen.

Dieser Datenempfangsschaltung DIP entspricht eine Datensendeschaltung DOP, mit der die verschlüsselten Dateneingangssignale DAI zum Wartungsprozessor SVP übertragen werden. Sie

6

enthält ein Datensendeflipflop DIN, das mit der positiven Flanke des Ausgangstaktsignals CLO getaktet wird. An seinem D-Eingang ist folgende logische Bedingung (8) realisiert:

$$\text{DIN} = \text{FRAME} \cdot \text{DAO} + \overline{\text{FRAME}} \cdot [(\text{COMR0} \cdot \text{STAR8} + \text{COMR0} \cdot \text{DTOSVP}) \oplus \text{TP1}] \tag{8}$$

Dabei ist $\overline{\text{FRAME}}$ durch die Boolesche Gleichung (9) definiert:

$$\overline{\text{FRAME}} = \text{COMR1} \, ] \, \text{DMESS} \cdot \text{SHIFT1} \cdot \overline{\text{S1}} \cdot (\overline{\text{DOUT}} \cdot \overline{\text{DAO}}) \cdot (\text{TP2} + \text{DAO}) \tag{9}$$

Da, wie bereits vorher erläutert, vielfach Sendungen des Wartungsprozessors SVP vom Schnittstellenadapter SIA unmittelbar mit dem Eingangstaktsignal CLI gekoppelt wieder zum Wartungsprozessor übertragen werden, ist die Datenempfangsschaltung DIP — wie in den Gleichungen (8) und (9) ausgedrückt — auch unmittelbar mit der Datensendeschaltung DOP verbunden.

Vorstehend wurde bereits angedeutet, daß vom Schnittstellenadapter SIA in dem Textteil TX einer Leerrahmensendung BLK vom Wartungsprozessor SVP abgerufene Datenbitstellen eingefügt werden. Dabei kann es sich um Daten handeln, die von der angeschlossenen Funktionseinheit FUj über die Schnittstelle FIF seriell dem Schnittstellenadapter SIA als Datsignal DTOSVP zum Wartungsprozessor angeboten werden. Es kann sich aber auch um Statussignale STAT0 bis STAT7 handeln, die den Zustand der angeschlossenen Funktionseinheit FUj definieren und über die Schnittstelle FIF parallel in die Ein-/Ausgabeeinheit IOU des Schnittstellenadapters SIA übertragen werden. Diese werden dort in einem Statusregister STAR zusammen mit einem weiteren Statusbit, STATB, dessen Bedeutung noch erläutert wird, gespeichert. Sowohl die Datensignale DTOSVP zum Wartungsprozessor von der Funktionseinheit als auch die Statussignale STAT0 bis STAT8 werden seriell über einen zweiten Multiplexer MX2 der Datensendeschaltung DOP zugeführt. Diese codiert diese Daten entsprechend dem gewählten Übertragungsverfahren und fügt sie in den Textteil TX einer Leerrahmensendung BLK ein.

Von der angeschlossenen Funktionseinheit FUj wird über die Schnittstelle FIF zum Schnittstellenadapter SIA noch ein weiteres Steuersignal WAIT für einen Wartezustand übertragen. Mit diesem Steuersignal kann die angeschlossene Funktionseinheit FUj den Wartungsprozessor SVP anweisen, zunächst keine weiteren Sendungen auszusenden, da beispielsweise der vorausgegangene Wartungsbefehl noch nicht ausgeführt ist. Für dieses Steuersignal WAIT steht keine eigene Leitung auf dem Schnittstellenanschluß SI zur Verfügung, es wird vielmehr auf der Leitung für die Dateneingangssignale DAI übertragen. Deshalb darf dieses Steuersignal WAIT für einen Wartezustand nur nach Abschluß einer Sendung gesetzt werden und verhindert dann neue Sendungen, indem es den Ausgang der Datensendeschaltung DOP auf einen hohen Pegel setzt.

Das für die Sendungen auf dem Schnittstellenanschluß SI verwendete Doppeltaktverfahren und die Redundanz der Endesequenz ES erlauben die Erkennung aller Einzelfehler der meisten Mehrfachfehler auf dem Schnittstellenanschluß SI. Die Fehlererkennung und die Behandlung wird gemeinsam vom Schnittstellenadapter SIA und vom Wartungsprozessor SVP vorgenommen. Soweit dies den Schnittstellenadapter SIA betrifft, werden die entsprechenden Funktionen in der Fehlererkennungseinheit ERU durchgeführt. Ein nur schematisch angedeutetes Fehlererkennungsnetzwerk ENW, das im wesentlichen aus Vergleicherschaltungen besteht, erkennt in an sich bekannter Weise beispielsweise eine einzelne falsche Abfrage des Dateneingangssignals DAO, wenn der Zustandswechsel bei einem Informationselement »1« bzw. »0« unterbleibt, oder wenn ein Zustandswechsel bei einem Sonderzeichen S auftritt. Außerdem wird ein in unverändertem Zustand mit niedrigem oder hohem Pegel aufrechterhaltenes Datenausgangssignal DAO erkannt. Schließlich können Taktfehler ermittelt werden, die dazu führen, daß eine Abfrage des Datenausgangssignals DAO durch ein verlorenes Ausgangstaktsignal CLO ausgelassen bzw. mit einem zusätzlichen Taktimpuls doppelt abgefragt wird.

Das Fehlererkennungsnetzwerk ENW enthält ein Fehlererkennungsflipflop ERR, dessen Funktion in Tabelle 6 kurz gefaßt dargestellt ist

Tabelle 6

|  | ERR |
| --- | --- |
| Takt | CL2 ↑ |
| Setzen | $\overline{\text{DOUT0}} \cdot \text{DAO} + \text{S1} \cdot \text{DOUT0} + \text{S1} \cdot \overline{\text{S2}} \cdot \overline{\text{DOUT0}} \cdot \overline{\text{DAO}} + \text{S2} \cdot \overline{\text{DOUT0}} \cdot \text{DAO}$ |
| Rücksetzen | RES |

Jede der vier Setzbedingungen gibt einen Fehlerfall wieder. Dazu gehört noch ein Fehlerspeicherflipflop ERRM, das mit der in Gleichung (10) ausgedrückten Bedingung gesetzt wird:

$$ERRM = ERR + S2 \cdot \overline{TP2} \cdot CLO \cdot \overline{DIN} \tag{10}$$

Der zweite Term in dieser Gleichung ist eine Taktfehlerbedingung, die durch das Fehlererkennungsflipflop ERR nicht erfaßt werden kann, da an einem Sendungsende wegen des Taktfehlers das letzte interne Taktsignal CL2 nicht mehr zustande kommt. Diese Fehler werden spätestens während der Endesequenz ES einer Sendung erkannt. Vom Fehlererkennungsnetzwerk ENW wird dann ein erstes Fehlerflipflop EFF1 gesetzt und mit dessen Ausgangssignal über ein erstes ODER-Glied OR1 an den Wartungsprozessor SVP das Anforderungssignal SRQ zum Rücksetzen abgegeben. Mit dem Fehlersignal ERRM wird auch das Statussignal STAT8 des Schnittstellenadapters SIA im Statusregister STAR in den Zustand »1« gesetzt. Folgt dann anschließend eine durch den Wartungsprozessor SVP ausgelöste Leseoperation, um den Status der Funktionseinheit FUj und des Schnittstellenadapters SIA festzustellen, dann wird auch dieses Statussignal mit dem Zustand »1« gelesen. Bei erkannten Fehlern wird auch der Strobegenerator SG in der Zeitsteuereinheit CTU angesteuert, so daß die Abgabe von Strobeimpulsen zur Steuerung des Datenverkehrs über die Schnittstelle FIF zur angeschlossenen Funktionseinheit FUj verhindert wird.

In der Fehlererkennungseinheit ERU ist weiterhin ein zweites Fehlerflipflop EFF2 vorgesehen. Dieses wird durch ein Anforderungssignal RTOSVP an den Wartungsprozessor SVP durch eine Funktionseinheit FUj gesetzt, wenn diese selbst durch ihre Fehlerüberwachung einen Fehler erkannt hat. Wie das erste Fehlerflipflop EFF1 ist auch das zweite Fehlerflipflop EFF2 mit dem ersten ODER-Glied OR1 verbunden, so daß auch dieses Anforderungssignal RTOSVP das Anforderungssignal SRQ an den Wartungsprozessor SVP auslöst.

Als Eingangssignal, das vom Wartungsprozessor SVP zur Fehlererkennungseinheit ERU übertragen wird, ist noch das Rücksetzsignal RES angegeben. Mit diesem Rücksetzsignal, das, wie erläutert, über eine eigene Schnittstellenleitung übertragen wird, hat der Wartungsprozessor SVP die Möglichkeit, die wesentlichen, den Datenverkehr über die Schnittstelle FIF zur Funktionseinheit FUj steuernden Schaltungen — wie oben angegeben — im Schnittstellenadapter SIA hart rückzusetzen. Dies wird nach dem Einschalten der Stromversorgung und nach katastrophalen Übertragungsfehlern notwendig, die die Auswertungen von Sendungen im Schnittstellenadapter SIA unmöglich machen.

Der Schnittstellenadapter SIA selbst, ein hochintegrierter Baustein mit einer Vielzahl von Funktionen, muß in geeigneter Weise testbar sein. Die Testmöglichkeit des vorliegenden Schnittstellenadapters SIA ist dadurch geschaffen, daß alle wesentlichen Flipflops des Schnittstellenadapters SIA für Prüfzwecke gelesen und geladen werden können. Dies wird dadurch erreicht, daß diese Flipflops, insbesondere also auch die des Statusregisters STAR und des Befehlsregisters COMR durch einen in Fig. 3 nicht dargestellten Schiebeimpuls im Testbetrieb zu einem Schieberegister aneinandergereiht werden. Dieser sogenannte Prüfbus, der nur im Testbetrieb des integrierten Bausteins gebildet wird, wird durch einen eigenen, in diesem Zustand von außen zurückgeführten Taktimpuls getaktet.

In Fig. 3 ist in diesem Zusammenhang angedeutet, daß über den Ausgang für das Befehlsregister COMR15, der das Ende des Prüfbusses darstellt, der Inhalt dieses Prüfbusses herausgeschoben wird. Ein beliebiges Bitmuster kann über einen zusätzlichen Signaleingang an der Bitstelle »0« des Statusregisters STAR mit dem Signal STARTE in den Prüfbus hineingeschoben werden. In Fig. 3 ist angedeutet, daß diese beiden Signalanschlüsse des Prüfbusses nicht der Schnittstelle FIF zur angeschlossenen Funktionseinheit FUj angehören.

Für die nachfolgende Erläuterung der Gesamtabläufe bei einer Wartungsoperation sei nochmals darauf hingewiesen, daß alle Vorgänge vom Wartungsprozessor SVP ausgehend gesteuert werden und also auch die bei ihm eingehenden Daten mit einer Ausnahme alle von ihm in dem Schnittstellenadapter SIA abgerufen werden. Diese Ausnahme bezieht sich auf die Fehlermeldung durch den Schnittstellenadapter SIA mit dem Anforderungssignal SRQ.

Zur Darstellung eines solchen Gesamtablaufes ist in Fig. 4 ein Beispiel für eine Befehlssendung CMD und eine anschließende Leerrahmensendung BLK, die einen Datentransfer von einer ausgewählten Funktionseinheit FUj über den angeschlossenen Schnittstellenadapter SIA zum Wartungsprozessor SVP auslöst, dargestellt. Alle dort dargestellten Impulsdiagramme mit den linksseitig angegebenen Signalbezeichnungen stehen zueinander in einem festen Taktraster, so daß daraus die zeitlichen Abläufe entnehmbar sind.

Eine Operation beginnt immer mit einer Befehlssendung CMD durch den Wartungsprozessor SVP an die ausgewählte Funktionseinheit FUj. Diese Befehlssendung CMD ist durch eine entsprechende Codierung in ihrer Kopfsequenz KS definiert. Der Textteil TX der Befehlssendung CMD wird im Schnittstellenadapter SIA in das Befehlsregister COMR übernommen. Im Beispiel hat das Befehlsregister COMR 16 Bitstellen, bis auf die niederwertigste Bitstelle sind alle Ausgänge des Befehlsregisters über die Schnittstelle FIF an die Funktionseinheit FUj angeschlossen, so daß der Text einer empfangenen Befehlssendung der Funktionseinheit parallel angeboten wird. Das niederwertigste Textbit wird jedoch im Schnittstellenadapter SIA nur intern verwendet. Da das Befehlsregister COMR als Schieberegister ausgebildet wird, werden bei Befehlssendungen mit kurzen Textteilen TX nur die Bitpositionen mit den niedrigeren Nummern aufgefüllt, bei langen Textteilen wird der Inhalt des Befehlsregisters COMR über die letzte Bitposition hinausgeschoben. Damit stehen im Befehlsregister COMR immer nur die 16 letzten Bitstellen eines Textteiles TX.

Mit dem Inhalt der niederwertigsten Bitstellen des Befehlsregisters COMR sind allgemeingültige Codierungen festgelegt, die also nicht von einer speziellen ausgewählten Funktionseinheit FUj und deren spezifischen Funktionen abhängig sind. So läßt sich mit dem Inhalt der niederwertigsten Bitposition (COMR0) des Befehlsregisters COMR unterscheiden, ob der zwischengespeicherte Befehl für die angeschlossene Funktionseinheit FUj oder für den Schnittstellenadapter SIA selbst gilt. Die nächsthöhere Bitposition (COMR1) im Befehlsregister COMR definiert entweder Steuer- und Eingabe- oder Lesebefehle. Im vorgegebenen Beispiel gemäß Fig. 4, bei dem auf die Befehlssendung CMD eine Leerrahmensendung BLK folgt, muß also der Zustand dieser Bitposition im Befehlsregister COMR die nachfolgende Datensendung definieren.

Die Endesequenz ES der Befehlssendung CMD kennzeichnet nicht nur das Sendungsende, aus ihr wird auch, wenn kein Übertragungsfehler vorliegt, mit dem Strobegenerator SG der erste Strobeimpuls SCOM gemäß Gleichung (3) abgeleitet und damit der Inhalt des Befehlsregisters COMR gegenüber der angeschlossenen Funktionseinheit FUj als Wartungsbefehl gültig. Fig. 4 zeigt in den letzten beiden Zeilen, daß diese Befehlssendung begleitet mit dem Eingangstaktsignal CLI zum Wartungsprozessor SVP wieder zurückübertragen wird.

Die anschließende Sendung des Wartungsprozessors SVP ist allgemein betrachtet, eine Datensendung, hier mit der Besonderheit, daß im Textteil TX eine Folge von Informationselementen »0« übertragen wird. Aus der Kopfsequenz KS dieser Sendung wird mit dem Strobegenerator SG im Schnittstellenadapter SIA der zweite Strobeimpuls STRANS abgeleitet. Er ermöglicht einen parallelen Transfer des Inhalts eines durch den Wartungsbefehl im Befehlsregister COMR definierten Registers der Funktionseinheit FUj in ein als Schieberegister ausgebildetes Ausgangsregister. Die so bereitgestellte Information wird dann seriell über die Leitung für das Datensignal DTOSVP mit dem weiteren Strobeimpuls SSHIFT für bitserielle Datenein- bzw. Datenausgabe als Schiebeimpuls in den Schnittstellenadapter SIA übertragen. Dieser dritte Strobeimpuls SSHIFT wird gemäß Gleichung (5) gebildet. Begleitet wird diese serielle Datenübernahme von dem Schiebeimpuls SHIFT gemäß Gleichung (6).

Wenn mit der der Leerrahmensendung BLK vorausgegangenen Befehlssendung CMD das Lesen einer Statusmeldung definiert wurde, dann werden zunächst die Statussignale STAT0 bis STAT7 der Funktionseinheit FUj zusammen mit dem internen Statussignal STAT8 des Schnittstellenadapters SIA parallel übernommen und im Statusregister STAR gespeichert. Diese neun Informationselemente werden dann seriell in den Textteil TX der Leerrahmensendung BLK eingesetzt und so als Datensendung zum Wartungsprozessor SVP gesendet.

Aus der Endesequenz ES einer Datensendung wird im Schnittstellenadapter SIA der weitere Strobeimpuls SDAT gemäß Gleichung (7) am Ende einer Dateneingabe- oder Datenausgabe abgeleitet. Mit diesem Strobeimpuls SDAT kann die angeschlossene Funktionseinheit FUj z. B. den Inhalt des Eingangsschieberegisters über einen Parallelbus in das eigentliche Zielregister transferieren.

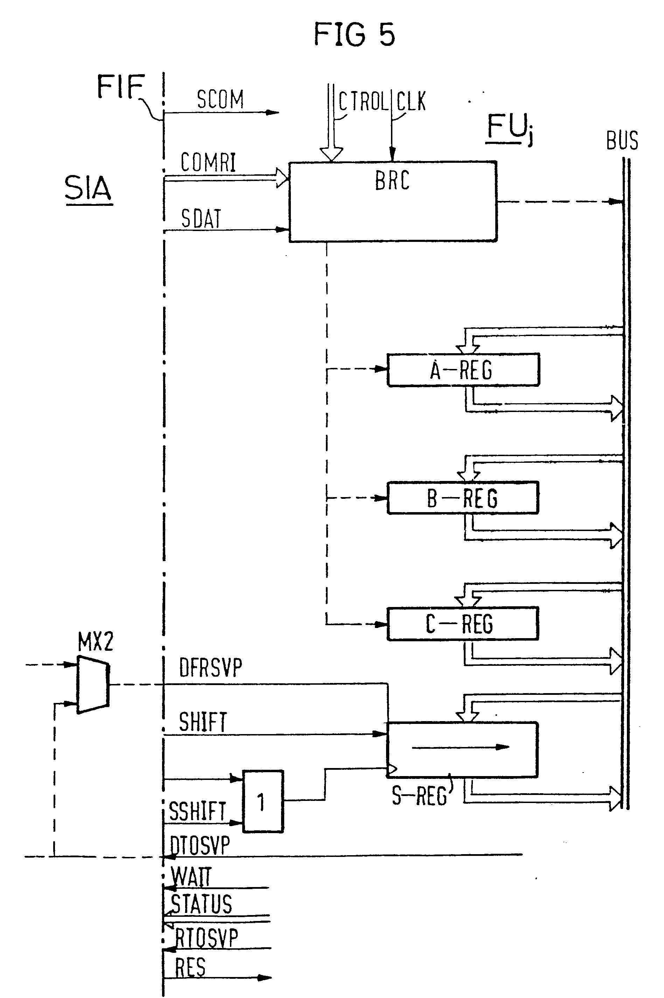

Um die Funktion des Schnittstellenadapters SIA noch mehr zu verdeutlichen, ist in Fig. 5 ein Beispiel für eine Funktionseinheit FUj dargestellt. Diese enthält einen aus mehreren Registern A-REG, B-REG, C-REG aufgebauten Registersatz, der über ein Bus-System ladbar bzw. lesbar ist. Diesem Registersatz ist eine Bus- und Registersteuereinheit BRC zugeordnet. Sie wird durch einen Betriebstaktzähler CLK getaktet und empfängt z. B. aus einem nicht dargestellten Mikroprogrammspeicher Steuersignale CTROL zur Registeradressierung.

An das Bussystem BUS ist außerdem ein Ein-/Ausgaberegister S-REG mit parallelen Ein- bzw. Ausgängen angeschlossen. Es ist als Schieberegister ausgebildet, seinen seriellen Eingang wird das Datensignal DFRSVP über die Schnittstelle FIF zum Schnittstellenadapter SIA zugeführt, während an seinem seriellen Ausgang das Datensignal DTOSVP über die Schnittstelle FIF zum Schnittstellenadapter SIA abgegeben wird. Dieses Ein-/Ausgaberegister S-REG ist bei Wartungsoperationen als Serien-Parallel-Wandler bzw. als Parallel-Serien-Wandler wirksam.

Wenn vom Wartungsprozessor SVP über den Schnittstellenadapter SIA eine Befehlssendung CMD abgegeben wird, mit der z. B. die Operation »Register Lesen« definiert ist, dann wird dieser Befehl über die mit dem ersten Strobeimpuls SCOM für gültig erklärten Befehlssignale COMRi zur Bus- und Registersteuereinheit BRC übertragen. Dieser durch die Befehlssignale COMRi definierte Wartungsbefehl setzt sich gegenüber der betriebsmäßigen Registeradressierung mit den Steuersignalen CTROL durch und definiert ein Quellenregister, z. B. A-REG. Das Zielregister ist in jedem Fall das Ein-/Ausgaberegister S-REG. Der Inhalt des durch den Wartungsbefehl definierten Quellenregisters wird vom Bussystem BUS mit dem zweiten Strobeimpuls STRANS getaktet in das Ein-/Ausgaberegister S-REG übernommen.

In Fig. 5 ist angedeutet, daß dieser Strobeimpuls parallel zu dem dritten Strobeimpuls für bitserielle Datenein- bzw. Datenausgabe SSHIFT über ein zweites ODER-Glied dem Ein-/Ausgaberegister S-REG über die Schnittstelle FIF vom Schnittstellenadapter SIA zugeführt wird.

Nun wird das Ein-/Ausgaberegister S-REG durch den über die Schnittstelle FIF zugeführten

9

0 009 600

Schiebeimpuls SHIFT auf einen Funktionszustand »Schieben rechts« umgestellt. Damit können die in dem Ein-/Ausgaberegister S-REG enthaltenen Daten bitweise als Datensignale DTOSVP, getaktet durch den dritten Stroboimpuls SSHIFT, zum Schnittstellenadapter SIA und von da aus zum Wartungsprozessor SVP übergeben werden. In Fig. 5 ist angedeutet, daß diese Daten über den zweiten Multiplexer MX2 des Schnittstellenadapters SIA als Datensignale DFRSVP vom Wartungsprozessor zur Funktioneinheit wieder in das Ein-/Ausgaberegister S-REG übertragen werden, so daß damit der Inhalt dieses Registers restauriert wird.

Der Wartungsprozessor SVP kann jedoch auch bestimmte Bitmuster in ein ausgewähltes Register der Funktioneinheit FUj übertragen. Eine derartige Operation leitet der Wartungsprozessor SVP mit einer Befehlssendung CMD »Register laden« ein. Auch in diesem Fall wird der im Befehlsregister COMR des Schnittstellenadapters SIA zwischengespeicherte Wartungsbefehl einschließlich der Registeradresse über die Leitungen für die Befehlssignale COMRi zur Bus- und Registersteuereinheit BRC mit dem ersten Stroboimpuls SCOMR übergeben. Danach wird in diesem Fall zunächst das Ein-/Ausgaberegister vom Schnittstellenadapter SIA her mit dem Schiebeimpuls SHIFT auf den Funktionszustand »Schieben rechts« umgeschaltet. Damit können die von Wartungsprozessor SVP übertragenen Daten bitweise als Datensignale DFRSVP in das Ein-/Ausgaberegister S-REG, gesteuert durch den dritten Stroboimpuls SSHIFT, eingeschrieben werden. Mit den von der Bus- und Registersteuereinheit BRC übernommenen Befehlssignalen ist auch die Zielregisteradresse definiert, die sich gegenüber der betriebsmäßigen Registeradressierung durchsetzt. In diesem Fall ist das Quellenregister das Ein-/Ausgaberegister S-REG. Die Übernahme dieses Registerinhalts vom Bussystem BUS in das ausgewählte Zielregister z. B. B-REG, wird durch den vierten Stroboimpuls SDAT getaktet.

Mit diesem Beispiel dürfte wohl nun deutlich sein, wie auch bei anderen Funktionseinheiten der Datenverkehr bei Wartungsoperationen über den Schnittstellenadapter SIA mit Hilfe der Strobeimpulse SCOMR, STRANS, SSHIFT bzw. SDAT zu steuern ist. Gerade in bezug auf die Ausbildung der Funktionseinheiten ist hier die Schaltungsstruktur sehr flexibel. So könnte z. B. das Ein-/Ausgaberegister S-REG auch für den Normalbetrieb verwendet werden, da der Wartungszustand einem Stopzustand der Funktioneinheit entspricht. Dann müßte aber auch vom Wartungsprozessor SVP her das Ein-/Ausgaberegister S-REG über die Befehlssignale COMRi explizit adressiert werden können.

Weiterhin wäre denkbar, das Ein-/Ausgaberegister in zwei Register zu teilen, von denen das eine als Eingabe-, das andere als Ausgaberegister dient. Dabei ist aber zu berücksichtigen, daß der sogenannte »Hardcore«, also der für Wartungsoperationen auch im Fehlerfall noch funktionsfähig bleibende Hardwareumfang, dann wiederum vergrößert ist.

Weiterhin läßt sich bei dieser Schaltungsstruktur festlegen, welche Signale als Statussignale einer Funktioneinheit FUj im Schnittstellenadapter SIA gespeichert werden sollen. Diese Signale können vom Wartungsprozessor SVP gelesen werden, ohne daß interne Ressourcen der Funktioneinheit dafür benötigt werden, sie können also auch im nicht normalen Betriebsfall ermittelt werden. Der Schnittstellenadapter SIA bietet darüber hinaus die Möglichkeit, in Ausnahmefällen durch extern angeschaltete Schieberegister das Befehlsregister COMR oder das Statusregister STAR zu verbreitern.

Wenn paritätsgesicherte Register oder Speicher über paritätsgesicherte Busse geladen oder gelesen werden sollen, ist es sinnvoll, im Regelfall das Ein-/Ausgaberegister S-REG so aufzubauen, daß beim bitseriellen Lesen vor jeweils 8 Datenbits das zugehörige Paritätsbit herläuft. Denn in diesem Fall können vom Wartungsprozessor SVP hardwaremäßig beim Laden die Paritätsbits generiert werden bzw. beim Lesen geprüft werden. Bei einer anderen Anordnung ist nur eine Übertragung von und zum Wartungsprozessor im Transparentmodus möglich, bei dem alle Datenbits gleich behandelt werden. Der Transparentmodus allerdings ermöglicht auch, daß Paritätsbits, softwaregesteuert, in Registern beliebig verändert werden können, dies ist für Diagnosezwecke durchaus von Bedeutung.

Liste der Bezugszeichen

Fig. 1

| FU1 ... FUj | Funktionseinheiten der datenverarbeitenden Anlage |
|---|---|
| SVP | Wartungsprozessor |
| SI | Schnittstellenanschluß |
| PSC | Koordinatorschaltung |
| SIP | Ein-/Ausgabetor des Wartungsprozessors |
| SIM | Schnittstellenmultiplexer |
| T | Übertragerbaustein |
| SIA | Schnittstellenadapter |
| CLO | Ausgangstaktsignal |
| DAO | Datenausgangssignal |

10

| | |
|---|---|
| RES | Rücksetzsignal |
| CLI | Eingangstaktsignal |
| DAI | Dateneingangssignal |
| SRQ | Anforderungssignal zum Rücksetzen |

**FIG. 2**

| | |
|---|---|
| L | Niedrigpegel |
| H | hoher Pegel |
| S | Sonderzeichen |
| t1 | Impulsdauer |
| t2 | Impulsperiode |
| t3 | Zeit für den Vorlauf im Datensignal |
| t4 | Zeit für den Nachlauf im Datensignal |
| KS | Kopfsequenz |
| TX | Textteil |
| ES | Endesequenz |
| CMD | Befehlssendung |
| DTS | Datensendung |
| BLK | Leerrahmensendung |

**Fig. 3**

| | |
|---|---|
| CTU | Zeitsteuereinheit |
| IOU | Ein-/Ausgabeeinheit |
| ERU | Fehlererkennungseinheit |
| NOR1 | 1. NOR-Glied |
| ERR | Fehlersignal |
| SFF | Satz von Zustandstlipflops |
| SG | Strobegenerator |
| FIF | Schnittstelle zur Funktionseinheit |
| SHIFT | Schiebeimpuls |
| DIP | Datenempfangsschaltung |
| COMR | Befehlsregister |
| COMR1...COMR15 | Befehlssignale |
| MX1 | 1. Multiplexer |
| DFRSVP | Datensignal vom Wartungsprozessor zur Funktionseinheit |
| DOP | Datensendeschaltung |
| DTOSVP | Datensignal zum Wartungsprozessor von der Funktionseinheit |
| STAT0 .. STAT7 | Statussignale der Funktionseinheit |
| STAR | Statusregister |
| STAT8 | Statussignal des Schnittstellenadapters |
| WAIT | Steuersignal für einen Wartezustand |
| ENW | Fehlererkennungsnetzwerk |
| EFF1 | 1. Fehlerflipflop |
| OR1 | 1. ODER-Glied |
| EFF2 | 2. Fehlerflipflop |
| RTOSVP | Anforderungssignal an den Wartungsprozessor durch eine Funktionseinheit |
| STARTE | Eingangssignal für Prüfbus |

**Fig. 4**

| | |
|---|---|
| SCOM | 1. Strobeimpuls (Inhalt Befehlsregister gültig) |
| STRANS | 2. Strobeimpuls (Paralleltransfer in Schieberegister der Funktionseinheit) |
| SSHIFT | 3. Strobeimpuls für bitserielle Datenein- bzw. Datenausgabe |
| SDAT | 4. Strobeimpuls (Parallelübernahme) |

**Fig. 5**

| | |
|---|---|
| A-REG | |
| B-REG | Registersatz einer Funktionseinheit |
| C-REG | |
| BUS | Bussystem |
| BRC | Bus- und Registersteuereinheit |
| CLK | Betriebstakt |

11

CTROL    Steuersignale zur Registeradressierung
S-REG    Ein-/Ausgaberegister
OR2      2. ODER-Glied

**Patentansprüche**

1. Verfahren zum Durchführen von Wartungsoperationen über eine Schnittstelle zwischen einem Wartungsprozessor (SVP) und einer Mehrzahl einzeln zu prüfender Funktionseinheiten (FUj) eines datenverarbeitenden Systems, wobei jeder Schnittstellenanschluß (SI) zu einer Funktionseinheit (FUj) unabhängig von deren Funktionsumfang identisch ausgebildet ist und in jeder Funktionseinheit ebenfalls ein identisch ausgebildeter Schnittstellenadapter (SIA) vorgesehen ist, der als Umcodierer und Zwischenspeicher für Daten- und Steuerinformationen zu und von der Funktionseinheit dient und dessen interne Schnittstelle (FIF) zur Funktionseinheit wesentlich breiter als die Schnittstelle zum Wartungsprozessor (SVP) ausgelegt ist, und wobei zur Ausführung von Wartungsoperationen Daten bzw. Steuersignale, begleitet von Taktsignalen, bitseriell in beiden Richtungen über die Schnittstellenanschlüsse (SI) übertragen werden, dadurch gekennzeichnet, daß die Übertragung der Datensignale (DAO, DAI) mit einem gesicherten Verfahren durchgeführt wird und zusätzlich auf eigenen Leitungen uncodierte Notsignale (SRQ, RES) übertragen werden können, daß bei der Übertragung der Datensignale (DAO, DAI) über den Schnittstellenanschluß (SI) in jeder Übertragungsrichtung die Taktisgnale (CLO, CLI) auf eigenen Leitungen gesondert übertragen werden, wobei aus dem vom Wartungsprozessor (SVP) abgegebenen Ausgangstaktsignal (CLO) das in Gegenrichtung übertragene Eingangstaktsignal (CLI) abgeleitet wird, daß die Datenelemente zum Übertragen in Impulspaare umgewandelt werden, deren Flanken jeweils mit einer der beiden Flanken des zugehörigen Taktsignals synchronisiert sind, wobei jedes Impulspaar bei jeder der anderen Flanken des Taktsignals ausgewertet wird, und daß der Informationsaustausch zwischen dem Schnittstellenadapter (SIA) und der zugehörigen Funktionseinheit (FUj) mit gesonderten Strobeimpulsen (SCOM, SDAT, STRANS, SSHIFT) gesteuert wird.

2. Verfahren nach Anspruch 1, dadurch gekennzeichnet, daß die Taktfrequenz des Ausgangstaktes (CLO) unterhalb einer vorgegebenen Maximalfrequenz wählbar ist und dabei auch Taktpausen zulässig sind.

3. Verfahren nach einem der Ansprüche 1 oder 2, dadurch gekennzeichnet, daß innerhalb eines Impulspaares ein Zustandswechsel von einem niedrigen auf einen hohen Pegel ein Datenelement mit dem einen binären Zustand, ein umgekehrter Zustandswechsel ein Datenelement mit dem anderen binären Zustand festlegt und daß von den beiden anderen möglichen Impulspaaren ohne Zustandswechsel nur eines als Sonderzeichen (S) zulässig ist.

4. Verfahren nach einem der Ansprüche 1 bis 3, dadurch gekennzeichnet, daß die Datenelemente blockweise, eingeleitet durch eine aus mehreren Impulspaaren bestehende Kopfsequenz (KS), mit einer variablen Länge des Textteiles (TX) und abgeschlossen durch eine eindeutig unterscheidbare Endesequenz (ES) übertragen werden.

5. Verfahren nach Anspruch 3 und 4, dadurch gekennzeichnet, daß die Endesequenz (ES) zur eindeutigen Unterscheidung von Datenelementen des Textteils (TX) Sonderzeichen (S) enthält, die nur dort verwendet werden.

6. Verfahren nach einem der Ansprüche 1 bis 5, dadurch gekennzeichnet, daß Wartungsoperationen aus drei vom Wartungsprozessor (SVP) ausgesandten, durch unterschiedlich ausgebildete Kopfsequenzen (KS) unterscheidbaren und durch identische Endesequenzen (ES) abgeschlossenen Sendungen gebildet werden, von denen innerhalb einer Wartungsoperation immer zunächst eine Befehlssendung (CMD) zum Einstellen von Funktionen im Schnittstellenadapter (SIA) bzw. der angeschlossenen Funktionseinheit (FUj) einer Datensendung (DTS) oder einer Leerrahmensendung (BLK) vorausgeht und mit letzterer der Wartungsprozessor (SVP) eine Datensendung aus dem Schnittstellenadapter (SIA) einleitet und daß die vom Wartungsprozessor zum Schnittstellenadapter zusammen mit dem Ausgangstaktsignal (CLO) übertragenen Sendungen in Gegenrichtung zusammen mit dem abgeleiteten Eingangstaktsignal (CLI) rückübertragen werden, wobei vom Schnittstellenadapter bei einem vom Wartungsprozessor angeforderten Datentransport in den Textteil (TX) mit Datenelementen »0« einer Leerrahmensendung die bereitgestellten Datenelemente codiert eingesetzt werden.

7. Schnittstellenadapter zur Durchführung des Verfahrens nach einem der Ansprüche 1 bis 6, gekennzeichnet durch eine Zeitsteuereinheit (CTU) mit einem prozessorseitigen Anschluß zum Zuführen des Ausgangstaktsignals (CLO) an ein invertierendes Verknüpfungsglied (NOR1), an dessen Ausgang das abgeleitete Eingangstaktsignal (CLI) abgegeben wird, mit einem Satz von durch das Ausgangstaktsignal getakteten und durch empfangene Datensignale (DAO) einstellbaren Zustandsflipflops (SFF) und mit einem Strobegenerator (SG), der abhängig vom Zustand ausgewählter Zustandsflipflops Strobeimpulse (SCOM, SDAT, STRANS, SSHIFT) zum Steuern des Datenaustausches mit der Funktionseinheit erzeugt, durch eine Ein-/Ausgabeeinheit (IOU) mit prozessorseitigen Anschlüssen für die seriellen Datenausgangs- und Dateneingangssignale (DAO bzw. DAI), an die eine Datenempfangsschaltung (DIP) zum Decodieren der codiert übertragenen Datenausgangssignale (DAO), mit einer Datensendeschaltung (DOP) zum Verschlüsseln der zu übertragenden Dateneingangssignale (DAI) und mit Zwischenspeicherregistern (COMR, STAR) zum Zwischenspeichern parallel an die angeschlossene Funktionseinheit (FUj) auszugebender bzw. parallel von der Funktionseinheit empfangener Wartungsinformationen (COMRi; i = 1 bis 15, STATm; m = 0 bis 7) und durch eine Fehlererkennungseinheit (ERU) mit einem logischen Fehlererkennungsnetzwerk (ENW) zum Überprüfen der prozessorseitig empfangenen bzw. abzugebenden Sendungen (DTS, CMD, BLK) aufgrund der Redundanz des Übertragungsverfahrens und mit Fehlerflipflops (EFF1, EFF2), die an dieses Netzwerk bzw. an einen internen Schnittstellenanschluß für ein Anforderungssignal (RTOSVP) bei einem in der Funktionseinheit erkannten Fehler angeschlossen und deren Ausgänge logisch verknüpft an einen prozessorseitigen Anschluß für das an den Wartungsprozessor (SVP) zu übertragende Notsignal (SRQ) angeschlossen sind.

8. Schnittstellenadapter nach Anspruch 7, dadurch gekennzeichnet, daß eines der in der Ein-/Ausgabeeinheit (IOU) angeordneten Register als ein Befehlsregister (COMR) verwendet ist, in das bei einer Befehlssendung (CMD) die entschlüsselten Datenelemente des Textteils (TX) aus der Datenempfangsschaltung (DIP) übernommen werden und dessen Ausgänge zur Übergabe der Befehlssignale (COMRi) parallel an die interne Schnittstelle (FIF) zur Funktionseinheit (FUj) angeschlossen sind, daß ein weiteres Register als Statusregister (STAR) vorgesehen ist, dessen parallelen Eingängen Statussignale (STATm) der Funktionseinheit zuführbar sind und dessen serieller Ausgang mit der Datensendeschaltung (DOP) verbunden ist.

9. Schnittstellenadapter nach Anspruch 7 oder 8, dadurch gekennzeichnet, daß der Ausgang der Datenempfangsschaltung (DIP) weiterhin mit einem Anschluß der internen Schnittstelle (FIF) zur Funktionseinheit (FUj) zum bitseriellen Übertragen von Datensignalen (DFRSVP) vom Wartungsprozessor (SVP) zur Funktionseinheit und der Eingang der Datensendeschaltung (DOP) mit einem Anschluß der internen Schnittstelle zum bitseriellen Übertragen von Datensignalen (DTOSVP) von der Funktionseinheit zum Wartungsprozessor verbunden sind.

10. Schnittstellenadapter nach Anspruch 7, dadurch gekennzeichnet, daß der Strobegenerator (SG) in der Zeitsteuereinheit (CTU) derart ausgebildet ist, daß er aus dem Zustand der Zustandsflipflops (SFF) vier Strobeimpulse zum Steuern des Datentransfers über die interne Schnittstelle (FIF) zur Funktionseinheit (FUj) ableitet, von denen der erste Strobeimpuls (SCOM) den Inhalt des Befehlsregisters (COMR) für die Funktionseinheit als gültig kennzeichnet, ein zweiter Strobeimpuls (STRANS) einer bitseriellen Dateneingabe über den Eingang für Datensignale (DTOSVP) zum Wartungsprozessor (SVP) vorausgeht, ein weiterer Strobeimpuls (SDAT) eine bitserielle Datenein- oder Datenausgabe abschließt und der letzte Strobeimpuls (SSHIFT) jeweils die bitweise Übernahme bzw. Übergabe eines Datenelements markiert.

11. Schnittstellenadapter nach einem der Ansprüche 7 bis 10, dadurch gekennzeichnet, daß zum Prüfen einer einwandfreien Funktion alle seine wesentlichen Flipflops, insbesondere des Statusregisters (STAR), Zustandsflipflops (SFF) und des Befehlsregisters (COMR) zu einem durch einen extern zugeführten Testschiebeimpuls zu steuernden und durch einen ebenso extern zugeführten Testtaktimpuls getakteten Schieberegister zusammenschaltbar sind und daß dieses Schieberegister einen gesonderten Dateneingang (STARTE) bzw. -ausgang (COMR15) besitzt und damit von außen der Zustand aller angeschlossenen Flipflops einstellbar bzw. abfragbar ist.

## Claims

1. Method for the implementation of servicing operations via an interface between a servicing processor (SVP) and a plurality of function units (FUj) which are to be individually checked within a data processing system, where each interface connection (SI) to a function unit (FUj) is of identical construction regardless of its functional scope, and every function unit likewise contains an interface adaptor (SIA) of identical construction and which serves as recoder and intermediate store for items of data and control information to and from the function unit and whose internal interface (FIF) to the function unit is designed to be substantially wider than the interface to the servicing processor (SVP), and where, for the execution of servicing operations, items of data and control signals, accompanied by clock pulse signals, are transmitted in bit-serial form in both directions via the interface connections (SI), characterised in that the transmission of the data signals (DAO, DAI) is carried out in a protected operation, and in addition uncoded emergency signals (SRQ, RES) can be transmitted on separate lines, that in the transmission of the data signals (DAO, DAI) via the interface connection (SI) in each direction of transmission the clock pulse signals (CLO, CLI) are separately transmitted on separate lines, wherein, from the output clock pulse signal (CLO) emitted from the servicing processor (SVP) there is derived the input clock pulse signal (CLI) which is transmitted in the opposite direction, that for purposes of transmission the data elements are converted into pulse pairs whose flanks are each synchronised with one of the two flanks of the associated clock pulse signal, where each pulse pair is monitored at every one of the other flanks of the clock pulse signal, and that the information exchanged between the interface adaptor (SIA) and the associated function unit (FUj) is controlled by

**0 009 600**

special strobe pulses (SCOM, SDAT, STRANS, SSHIFT).

2. Method as claimed in claim 1, characterised in that the clock pulse frequency of the output clock pulse train (CLO) is selectable beneath a predetermined maximum frequency and clock pulse pauses are also permissible.

3. Method as claimed in one of the claims 1 or 2, characterised in that within a pulse pair a change in state from a low to a high level determines a data element possessing a first binary state, whereas a reverse change in state determines a data element possessing the other binary state, and that of the two other possible pulse pairs without any change in state only one is permitted as special symbol (S).

4. Method as claimed in one of the claims 1 to 3, characterised in that the data elements are transmitted in blocks, introduced by a head sequence (KS) composed of a plurality of pulse pairs, with a variable length of the text component (TX), and terminated by a clearly distinguishable end sequence (ES).

5. Method as claimed in claim 3 and 4, characterised in that in order that it may be clearly distinguished from data elements of the text component (TX) the endsequence (ES) contains special symbols (S) which are used only at this position.

6. Method as claimed in one of the claims 1 to 5, characterised in that servicing operations are composed from three transmissions which are emitted from the servicing processor (SVP), can be distinguished by means of head sequences (KS) of differing formation, and are terminated by identical end sequences (ES), of which, within a servicing operation, a command transmission (CMD), which serves to set up functions in the interface adaptor (SIA) and the function unit (FUj) connected thereto, always precedes a data transmission (DTS) or an empty frame transmission (BLK), and with which latter the servicing processor (SVP) initiates a data transmission from the interface adaptor (SIA), and that the transmissions emitted from the servicing processor to the interface adaptor together with the output clock pulse signal (CLO) are retransmitted in the opposite direction together with the derived input clock pulse signal (CLI), where, in the case of a data transport, requested by the servicing processor, into the text component (TX), with data elements »0«, of an empty frame transmission, the prepared data elements are used in coded form by the interface adaptor.

7. Interface adaptor for the implementation of the method claimed in one of the claims 1 to 6, characterised by a time control unit (CTU) having a processor-side connection for the supply of the output clock pulse signal (CLO) to an inverting logic-linking element (NOR1) from whose output the derived input clock pulse signal (CLI) is emitted, having a set of state flip-flops (SFF) which are pulsed by the output clock pulse signal and can be set up by received data signals (DAO), and having a strobe generator (SG) which, in dependence upon the state of selected state flip-flops, produces strobe pulses (SCOM, SDAT. STRANS, SSHIFT) which serve to control the data exchange with the function unit, further characterised by an input/output unit (IOU) having processorside connections for the serial data output signals and data input signals (DAO and DAI), to which is connected a data receiving circuit (DIP) which serves to decode the data output signals (DAO) which are transmitted in coded form, with a data transmitting circuit (DOP) which serves to encode the data input signals (DAI) which are to be transmitted, and with intermediate store registers (COMR, STAR) which serve to intermediately store items of servicing information (COMRi; i = 1 to 15, STATm; m = 0 to 7) which are to be output in parallel to the connected function unit (FUj) or are received in parallel from the function unit, and further characterised by a fault recognition unit (ERU) with a logic fault recognition network (ENW) which serves to check the transmissions (DTS, CMD, BLK) which are received and are to be emitted at the processor-side on the basis of the redundancy of the transmission operation, and with fault flip-flops (EFF1, EFF2) which are connected to this network and to an internal interface connection for a request signal (RTOSVP) in the event of a fault which has been recognised in the function unit and whose outputs are connected, logiclinked, to a processor side connection for the emergency signal (SRQ) which is to be transmitted to the servicing processor (SVP).

8. Interface adaptor as claimed in claim 7, characterised in that a register arranged in the input/output unit (IOU) is used as a command register (COMR) into which, in the event of a command transmission (CMD), the decoded data elements of the text component (TX) are transferred from the data receiving circuit (DIP), and whose outputs are connected in parallel to the internal interface (FIF) to the function unit (FUj) for the transfer of the command signals (COMRi), that a further register is provided by way of status register (STAR) whose parallel inputs can be supplied with status signals (STATm) of the function unit and whose serial output is connected to the data transmitting circuit (DOP).

9. Interface adaptor as claimed in claim 7 or 8, characterised in that the output of the data receiving circuit (DIP) is also connected to a terminal of the internal interface (FIF) to the function unit (FUj) for the bit-serial transmission of data signals (DFRSVP) from the servicing processor (SVP) to the function unit, and the input of the data transmitting circuit (DOP) is connected to a terminal of the internal interface for the bit-serial transmission of data signals (DTOSVP) from the function unit to the servicing processor.

10. Interface adaptor as claimed in claim 7, characterised in that the strobe generator (SG) in the time control unit (CTU) is designed in such manner that from the state of the state flip-flops (SFF) it derives four strobe pulses which serve to control the data transfer via the internal interface (FIF) to the

14

function unit (FUj), of which the first strobe pulse (SCOM) indicates that the content of the command register (COMR) for the function unit is valid, a second strobe pulse (STRANS) precedes a bit-serial data input via the input for data signals (DTOSVP) to the servicing processor (SVP), a further strobe pulse (SDAT) terminates a bit-serial data input or data output, and the last strobe pulse (SSHIFT) marks the bit-wise reception or transfer of a data element.

11. Interface adaptor as claimed in one of the claims 7 to 10, characterised in that for the testing of a satisfactory function of all its fundamental flip-flops, in particular of the status register (STAR), the status flip-flops (SFF) and the command register (COMR) can be interconnected to form a shift register which is to be controlled by an externally supplied test shift pulse and which is pulsed by a test clock pulse which is likewise supplied externally, and that this shift register possesses a special data input (STARTE) and output (COMR 15) and in this way the state of all the connected flip-flops can be set up or interrogated externally.

## Revendications

1. Procédé pour réaliser des opérations d'entretien, par l'intermédiaire d'un interface entre un processeur d'entretien (SVP) et plusieurs unités fonctionnelles (FUj) à contrôler individuellement d'un système de traitement des données, les différentes bornes de raccordement pour respectivement chaque unité fonctionnelle (FUj) étant réalisées de façon identique quelle que soit l'importance de la fonction de ces dernières et dans chaque unité fonctionnelle étant prévus des adaptateurs d'interface (SIA) identiques entre eux, chacun de ces adaptateurs servant de transcodeur et de mémoire intermédiaire pour des informations de données et de commande vers ou en provenance de l'unité fonctionnelle et dont l'interface intérieure (FIF) pour l'unité fonctionnelle est conçue de façon plus extensible que ne l'est le circuit d'adaptation pour le processeur d'entretien (SVP), alors que pour l'exécution des opérations d'entretien des signaux de données et de commande, accompagnés des signaux de cadence, sont transmis, en série par bit et dans les deux directions, par l'intermédiaire de jonctions (SI) du circuit d'adaption, caractérisé par le fait que la transmission des signaux de données (DAO, DAI) est opérée avec un procédé protégé, des signaux d'alarme non codés (SRQ, RES) pouvant, de plus, être transmis sur des lignes qui leur sont propres, que lors de la transmission des signaux de données (DAO, DAI) dans chacune des directions de la transmission par l'intermédiaire des jonctions (SI) du circuit d'adaptation, les signaux de cadence (CLO, CLI) sont transmis séparément par des lignes qui leur sont propres, alors qu'à partir du signal de cadence de sortie (CLO) émis à partir du processeur d'entretien (SVP) est dérivé le signal de cadence d'entrée (CLI) transmis dans la direction opposée, que les éléments des données sont transformés, pour la transmission, en paires d'impulsions dont les flancs respectifs sont synchronisés avec l'un des deux flancs du signal de cadence associé, chaque paire d'impulsions étant évaluée à chaque autre flanc du signal de cadence, et que l'échange d'informations entre l'adaptateur d'interface (SIA) et l'unité fonctionnelle associée (FUj) est commandé avec des impulsions en forme de créneaux (SCOM, SDAT, STRANS, SSHIFT).

2. Procédé selon la revendication 1, caractérisé par le fait que la fréquence de cadence de la cadence de sortie (CLO) est susceptible d'être choisie en-dessous d'une fréquence maximale prédéterminée, des pauses de cadence étant également admissibles.

3. Procédé selon l'une des revendications 1 ou 2, caractérisé par le fait qu'à l'intérieur d'une paire d'impulsions un changement d'état d'un niveau inférieur à un niveau supérieur détermine un élément de donnée d'un état binaire alors que le changement d'état inverse détermine un élément de donnée de l'autre état binaire, et que parmi les deux autres paires d'impulsions possibles, sans changement d'état, une seule est admissible comme signe particulier (S).

4. Procédé selon l'une des revendications 1 à 3, caractérisé par le fait que les éléments de données sont transmis par blocs, initialisés par une séquence de tête (KS) constituée par plusieurs paires d'impulsions, avec une longueur variable de la partie de texte (TX) et terminé par une séquence finale univogue.

5. Procédé selon la revendication 3 ou 4, caractérisé par le fait que la séquence finale (ES) comporte, pour une distinction univoque entre éléments de données de la partie de texte (TX), des signes particuliers (S) qui ne sont pas utilisés ailleurs.

6. Procédé selon l'une des revendications 1 à 5, caractérisé par le fait que des opérations d'entretien sont constituées par trois émissions provenant du processeur d'entretien (SVP) susceptibles d'être distinguées par des séquences de tête (KS) formées de façon différentes et terminées par des séquences finales identiques (ES), émissions parmi lesquelles se présente en premier, à l'intérieur d'une opération d'entretien, toujours une émission d'instruction (CMD) pour régler des fonctions dans l'adaptateur d'interface (SIA) ou des unités fonctionnelles (FUj) branchées d'une émission de données (DTS) ou d'une émission à trame vide (BLK), cette dernière provoquant l'émission par le processeur d'entretien (SVP), une émission de données à partir de l'adaptateur d'interface (SIA), et par le fait que les émissions transmises du processeur d'entretien vers l'adaptateur d'interface, avec le signal de cadence de sortie (CLO), sont retransmis dans la direction opposée avec le signal de cadence d'entrée dérivé (CLI), la réalisation étant telle que lors d'un transport de données sollicitées par le processeur d'entretien, l'adaptateur d'interface introduit dans la partie de texte (TX) à éléments de donnée »0« d'une émission à trame vide, les éléments de données codés qui ont été préparés.

7. Adaptateur d'interface pour la mise en oeuvre du procédé selon l'une des revendications 1 à 6, caractérisé par une unité de commande des temps (CTU) possédant une borne de raccordement du côté processeur pour appliquer le signal de cadence de sortie (CLO) à un circuit logique inverseur (NOR1) à la sortie duquel est émis le signal de cadence d'entrée (CMI) dérivé, possédant un jeu de multivibrateurs bistables d'états (SFF) rythmés pas le signal de cadence de sortie et réglables par des signaux de données reçus (DAO), et possédant en outre un générateur de signaux de créneaux (SG) qui, en fonction de l'état du multivibrateur bistable d'état sélectionné, produit des impulsions en forme de créneaux (SCOM, SDAT, STRANS, SSHIFT) pour commander l'échange de données avec l'unité fonctionnelle, caractérisé par une unité entrée/sortie (IOU) possédant des bornes de raccordement situées du côté processeur pour des signaux sériels de données de sortie et de données d'entrée (DAO, DAI) auxquelles est raccordé un circuit de réception de données (DIP) pour décoder les signaux de sortie des données (DAO) transmis, possédant un circuit d'émission de données (DOP) pour coder des signaux d'entrée de données (DAI) à transmettre, et possédant en outre des registres de mémoires intermédiaires (COMR, STAR) pour mémoriser temporairement des informations d'entretien (COMRi; i = 1 à 15, STATm; m = 0 à 7) qui sont à émettre en parallèle à l'unité fonctionnelle branchée (FUj) ou reçus en parallèle à partir de l'unité fonctionelle, et, en outre, caractérisé par une unité de détection d'erreurs (ERU) comportant un réseau logique d'identification d'erreurs (ENW) pour contrôler, du point de vue de la redondance du procédé de transmission, les émissions (DTS, CMD, BLK) reçues ou à émettre du côté du processeur, et comportant des multivibrateurs bistables d'erreurs (EFF1, EFF2) qui sont reliés à ce réseau ou à une jonction interne d'interface pour un signal de demande (RTOSVP) lors d'une erreur identifiée dans l'unité fonctionnelle, et dont les sorties, combinées logiquement, sont reliées à une borne, située du côté du processeur, pour le signal d'alarme (SRQ) qui est à transmettre au processeur d'entretien (SVP).

8. Adaptateur d'interface selon la revendication 7, caractérisé par le fait que l'un des registres disposés dans l'unité entrée/sortie (IOU) est utilisé comme registre d'instructions (COMR) dans lequel sont pris en charge à partir du circuit de réception de données (DIP), lors d'une émission d'instruction (CMD), les éléments de données codés de la partie de texte (TX), et dont les sorties sont reliées en parallèle sur l'interface interne (FIF) menant à l'unité fonctionnelle (FUj), pour la transmission des signaux d'instructions (COMRi), et qu'un autre registre est prévu comme registre de statuts (STAR) aux entrées parallèles duquel sont suceptibles d'être appliqués des signaux de statuts (STATm) de l'unité fonctionnelle et dont les sorties en série sont reliées au circuit d'émission de données (DOP).

9. Adaptateur d'interface selon la revendication 7 ou 8, caractérisé par le fait que la sortie du circuit de réception des données (DIP) est en outre reliée avec une borne de raccordement de l'interface interne (FIF) vers l'unité fonctionnelle (FUj) pour la transmission en série par bit de signaux de données (DFRSVP) du processeur d'entretien (SVP) vers l'unité fonctionnelle et que l'entrée du circuit d'émission des données (DOP) est reliée à une borne de liaison de l'interface interne pour la transmission en série par bit de signaux de données (DTOSVP) de l'unité fonctionnelle au processeur d'entretien.

10. Adaptateur d'interface selon la revendication 7, caractérisé par le fait que le générateur de signaux en forme de créneaux (SG) est réalisé dans l'unité de commande d'états (CTU) de telle manière qu'il dérive à partir de l'état des multivibrateurs bistables d'états (SFF) quatre impulsions en forme de créneaux pour commander le transfert de données par l'intermédiaire de l'interface interne (FIF) menant à l'unité fonctionnelle (FUj), impulsions en forme de créneaux dont la première (SCOM) caractérise comme valable le contenu du registre d'instructions (COMR) pour l'unité fonctionnelle, dont une seconde impulsion en forme de créneaux (STRANS) précéde une introduction sérielle de données par l'intermédiaire de l'entrée des signaux de données (DTOSVP) vers le processeur d'entretien (SVP), alors qu'une autre impulsion en forme de créneau (SDAT) termine une entrée ou une sortie, en série par bit, de données et que la dernière impulsion en forme de créneau (SSHIFT) marque la prise en charge ou l'émission, bit par bit, d'un élément de donnée.

11. Adaptateur d'interface selon l'une des revendications 7 à 10, caractérisé par le fait que pour contrôler le fonctionnement sans défauts de tous ces multivibrateurs bistables essentiels, plus particulièrement du registre de statuts (STAR), du multivibrateur bistable d'états (SFF) et du registre d'instructions (COMR) sont susceptibles d'être assemblés en un registre à décalage qui est à commander par une impulsion de décalage de contrôle appliquée de l'extérieur et rythmés par une impulsion de cadence de contrôle également appliquée de l'extérieur, et que ce registre à décalage possède une entrée de données (STARTE) et une sortie de données (COMR15) particulières, en sorte qu'à partir de l'extérieur tous les multivibrateurs bistables qui sont branchés sont susceptibles d'être réglés ou interrogés.

## FIG 1

## FIG 2

| | | |
|---|---|---|
| LH | $\hat{=}$ | "∅" |
| HL | $\hat{=}$ | "1" |
| HH | $\hat{=}$ | S |
| LL | $\hat{=}$ | — |

# FIG 3

# FIG 4

# FIG 5